# EUROPÄISCHE PATENTSCHRIFT

(11) **EP 1 141 592 B1**
(45) Veröffentlichungstag und Bekanntmachung des Hinweises auf die Patenterteilung: **10.07.2002**
(21) Anmeldenummer: 99963510.5
(22) Anmeldetag: 13.12.1999
(51) Int. Cl.: F16H 61/22, F16H 61/12

(54) **STEUEREINRICHTUNG FÜR EIN AUTOMATISCHES KRAFTFAHRZEUG-GETRIEBE**
CONTROL DEVICE FOR AN AUTOMATIC AUTOMOBILE TRANSMISSION
DISPOSITIF DE COMMANDE POUR TRANSMISSION AUTOMATIQUE D'UN VEHICULE

(30) Priorität: 18.12.1998 DE 19858543
(43) Veröffentlichungstag der Anmeldung: 10.10.2001
(73) Patentinhaber: ZF FRIEDRICHSHAFEN Aktiengesellschaft, 88038 Friedrichshafen (DE)
(72) Erfinder: GIERER, Georg, D-88079 Kressbronn (DE); RÜHRINGER, Uwe, D-88069 Tettnang (DE)
(86) Internationale Anmeldenummer: EP9909852
(87) Internationale Veröffentlichungsnummer: WO0037836

(56) Entgegenhaltungen:
- DE-A- 4 322 523
- DE-C- 4 317 257
- GB-A- 2 293 219

## Beschreibung

Die Erfindung betrifft eine elektro-hydraulische Steuereinrichtung für ein Kraftfahrzeug-Automatik-Getriebe nach dem Oberbegriff des Anspruchs 1.

Von einer Bedieneinrichtung in einem Kraftfahrzeug ist es möglich, verschiedene Betriebsstufen, z. B. Vorwärtsfahrt, Rückwärtsfahrt, Neutral oder Parkstellung, vorzuwählen. Im Automatik-Getriebe werden, je nach eingelegter Betriebsstufe, Kupplungen und Bremsen über eine hydraulische Steuerung betätigt. In der Regel ist die Wirkverbindung von der Bedieneinrichtung im Innenraum des Kraftfahrzeugs mechanisch, z. B. in Form von Bowdenzügen, zur elektrohydraulischen Steuereinrichtung im Automatik-Getriebe ausgeführt. Es besteht jedoch auch die Möglichkeit, die Wirkverbindung zwischen Bedieneinrichtung und Getriebesteuerung rein elektrisch auszuführen. Dies hat den Vorteil, den Ort der Bedieneinrichtung im Fahrzeug-Innenraum frei wählen zu können. Da die Parksperre bei einer elektrisch ausgeführten Wirkverbindung nicht mehr mechanisch über den Bowdenzug aus- bzw. eingelegt werden kann, muß die Parksperre über einen Federspeicher ein- und hydraulisch ausgelegt werden.

Die DE 43 22 523 A1 beschreibt eine elektro-hydraulische Steuereinrichtung für ein Kraftfahrzeug-Automatik-Getriebe, bei welcher die Wirkverbindung zwischen der Bedieneinrichtung im Kraftfahrzeug und der elektro-hydraulischen Steuereinrichtung elektrisch ausgeführt sein kann und die elektro-hydraulische Steuereinrichtung so gestaltet ist, daß die Betriebsstufen D, R und N durch Druckbeaufschlagung einzelner Schaltglieder eingelegt werden, während die Betriebsstufe P durch Drucklosschaltung aller Schaltglieder eingelegt wird. Dies führt dazu, daß nicht nur in der Betriebsstufe P, sondern in allen Betriebsstufen des Wählhebels bei Druckausfall die Parksperre eingelegt wird. Um bei Ausfall der elektrischen Spannungsversorgung oder einem Defekt im elektronischen Steuergerät die eingelegte Parksperre entriegeln zu können, wird eine Notentriegelungseinrichtung offenbart, mittels welcher mechanisch die Parksperre entriegelt werden kann.

Bei einem Automatik-Getriebe besteht die Notwendigkeit, bei Ausfall der elektronischen Steuereinrichtung das Fahrzeug zumindestens in einem geschalteten Gang bei ausgelegter Parksperre über die Antriebskraft des Motors fortbewegen zu können. In der GB-A 2 293 219 ist eine elektro-hydraulische Steuereinrichtung für ein Automatgetriebe bekanntgeworden, bei der bei Ausfall der elektronischen Steuerung ein vorgewählter Vorwärtsgang eingelegt werden kann, nachdem das Fahrzeug bei unverändert eingelegter Fahrposition zum Stillstand gebracht wurde und im Stillstand die Bedieneinrichtung des Automatgetriebes zunächst in Parkstellung und danach zurück in die Fahrposition bewegt wurde, wobei ein Notsteuerventil in der hydraulischen Steuerung in eine Notlaufstellung umgesteuert wird. Dieses Notfahr-Programm sowie die Entriegelung der Parksperre wird bei mechanischer Wirkverbindung zwischen dem Bedienelement im Fahrgastraum und dem Automatik-Getriebe durch mechanisches Schalten eines hydraulischen Ventils in der elektrohydraulischen Steuerung des Automatik-Getriebes gelöst. Bei einer elektrischen Wirkverbindung zwischen dem Bedienelement im Fahrgastraum und dem Automatik-Getriebe ist die Möglichkeit nicht gegeben, das Notfahr-Programm und die Entriegelung der Parksperre vom Bedienelement aus einzulegen.

Aufgabe der Erfindung ist es, eine Steuerung für ein automatisches Kraftfahrzeug-Getriebe zu schaffen, bei welcher über eine Bedieneinrichtung im Fahrgastraum und eine elektrische Wirkverbindung zwischen der Bedieneinrichtung und dem Automatik-Getriebe die Betriebsstufen D, R und N sowie P vorgewählt werden können, wobei die Parksperre durch einen Federspeicher eingelegt und hydraulisch ausgelegt wird und bei Ausfall der elektronischen Getriebesteuerung die Parksperre manuell entriegelt werden kann und dabei automatisch das Getriebe in ein Notfahr-Programm geschaltet wird, um das Fahrzeug in einem zuvor festgelegten Gang betreiben zu können. Zusätzlich soll das Fahrzeug bei Ausfall der elektronischen Getriebesteuerung während der Vorwärtsfahrt bis zum Stillsetzen des Verbrennungsmotors weiter betrieben werden können und bei Rückwärtsfahrt die Parksperre automatisch einrasten.

Erfindungsgemäß wird diese Aufgabe durch eine auch die kennzeichnenden Merkmale des Anspruchs 1 oder 2 aufweisenden, gattungsgemäßen Getriebesteuerung gelöst.

Nach der Erfindung ist die elektronisch-hydraulische Steuereinrichtung eines automatisch schaltenden Kraftfahrzeug-Getriebes so gestaltet, daß die Betriebsstufen D, R und N durch Druckbeaufschlagung einzelner Schaltglieder eingelegt werden, während die Betriebsstufe P durch Drucklosschaltung aller Schaltglieder eingelegt wird. Dadurch wird in der Betriebsstufe P und in allen anderen Betriebsstufen des Wählhebels bei Druckausfall die Parksperre eingelegt. Die hydraulische Steuereinheit ist dergestalt ausgeführt, daß die verschiedenen Gangstufen eingelegt werden, indem das elektronische Steuergerät Magnetventile bestromt und dadurch Steuerventile umgesteuert werden, welche wiederum Betätigungseinrichtungen für Reibkupplungen bzw. -bremsen ansteuern. Bei Ausfall des elektronischen Steuergerätes werden die Magnete stromlos geschaltet und bei zuvor eingelegtem Rückwärtsgang die Steuerventile dergestalt umgesteuert, daß die Betätigungseinrichtungen der Reibkupplungen bzw. -bremsen sowie der Parksperreneinrichtung drucklos sind. Dies hat den Vorteil, daß bei Ausfall des elektronischen Steuergerätes automatisch die Kraftverbindung zwischen dem Antriebsmotor und der Ausgangswelle des Getriebes unterbrochen und gleichzeitig die Parksperreneinrichtung aktiviert wird. Über manuelles Verschieben der Parksperreneinrichtung über einen Bedienhebel außerhalb des Getriebes wird die Parksperre notentriegelt und gleichzeitig ein Ventil dergestalt geschaltet, daß der von einer Pumpe erzeugte Druck Steuerventile ansteuert, welche Betätigungseinrichtungen mit Druck beaufschlagen, so daß ein Vorwärtsgang eingelegt wird. Somit kann bei stehendem Fahrzeug durch manuelles Entriegeln über eine Notentriegelung der Parksperre automatisch in Vorwärtsfahrtrichtung eingelegt und weitergefahren werden. Die Parksperre bleibt bei manuell verrasteter Notentriegelung so lange ausgerastet und der über die Parksperreneinrichtung vorgewählte Gang eingelegt, bis die Parksperre wieder manuell verriegelt wird. Befindet sich das Fahrzeug in der Fahrtrichtung rückwärts und in diesem Zustand fällt das elektronische Steuergerät aus, werden durch Stromlosschalten aller Magnetventile die Betätigungseinrichtungen für die Reibkupplungen bzw. -bremsen drucklos geschaltet und der Kraftschluß zwischen Antriebsmotor und Ausgangswelle des Getriebes unterbrochen. Gleichzeitig wird das Ventil, welches die Kupplung für den Rückwärtsgang ansteuert, dergestalt umgesteuert, daß bei Notentriegelung der Parksperre wieder der Vorwärtsgang geschaltet werden kann.

Vorzugsweise werden die Ventile dergestalt angesteuert, daß bei Stromlosschaltung der Ventile durch einen Ausfall des elektronischen Steuergerätes während der Vorwärtsfahrt automatisch ein Notgang geschaltet wird und die Parksperre bis zum Abschalten des Verbrennungsmotors ausgelegt bleibt und während eines Ausfalles des elektronischen Steuergerätes bei Rückwärtsfahrt alle Kupplungen und Bremsen geöffnet werden und somit der Rückwärtsgang ausgelegt und automatisch die Parksperre eingelegt wird.

Weitere für die Erfindung wesentliche Merkmale sind der Figurenbeschreibung zu entnehmen.

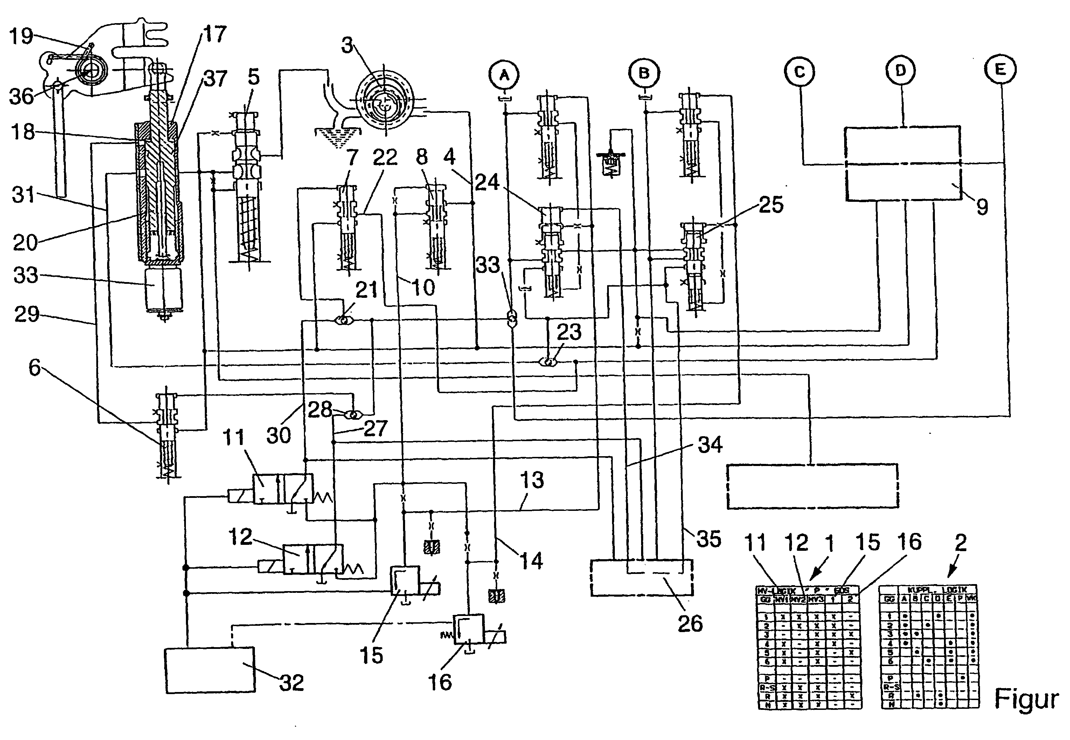

Die einzige Figur zeigt eine elektro-hydraulische Steuerung eines Automatikgetriebes, bei welchem die Kupplungen oder Bremsen A, B, C, D, E druckbeaufschlagbar sind und damit Gänge, wie im allgemeinen bei Automatikgetrieben bekannt, geschaltet werden können. Der Tabelle 1 Magnetventillogik ist zu entnehmen, welche Magnetventile angesteuert sein müssen, um bestimmte Gänge einzulegen. In der Tabelle 2 Kupplungslogik ist zu entnehmen, welche Bremsen oder Kupplungen mit Druck beaufschlagt sein müssen, um bestimmte Gänge einzulegen. Dabei bedeuten die Zahlen 1 bis 6 die eingelegten Gänge, der Buchstabe P die Parkstellung, d. h. ein Verriegeln des Automatikgetriebes, in dem z. B. eine Parkklinke in ein Parksperrenrad eingreift, der Buchstabe R den Rückwärtsgang und der Buchstabe N die Neutralstellung, bei welcher die Parksperre entriegelt sein muß, jedoch die Bremsen und Kupplungen nicht druckbeaufschlagt sein dürfen.

Wird der Kraftfahrzeugmotor gestartet, so wird eine Pumpe 3 angetrieben, welche mit ihm in Verbindung steht und fördert eine Flüssigkeitsmenge in die Leitung 4. Die Leitung 4 ist mit dem Systemdruckventil 5 verbunden, welches gewährleistet, daß bei drehendem Verbrennungsmotor ein bestimmtes Druckniveau im System erhalten bleibt. Ebenfalls ist die Leitung 4 mit dem Ventil 6 dem Reversierventil 7, dem Druckreduzierventil 8 und einer nicht näher dargestellten Schaltlogik 9, über welche die Bremsen oder Kupplungen C, D, E mit Druck beaufschlagt werden können, verbunden. Über das Druckreduzierventil 8 wird die Leitung 10 und somit die Magnetventile 11 und 12 mit Druck beaufschlagt. Die Leitung 13 bleibt drucklos, da das elektrische Drucksteuerventil 15 so geschaltet ist, daß die Leitung 13 mit dem drucklosen Tank verbunden ist. Da die Fläche 18 des Ventils 17 drucklos ist, bewegt die Feder 19 den Kolben 20 an seinen oberen Anschlag und bewegt eine nicht dargestellte Parkklinke, welche mit dem Kolben 20 in Verbindung steht, in ein nicht dargestelltes Parksperrenrad, welches durch das Eingreifen der Parkklinke in dieser Stellung verriegelt wird und somit den Abtrieb des Automatikgetriebes blokkiert. Diese Schaltstellung entspricht der Stellung P, in welcher die Kupplungen oder Bremsen A, B, C, D, E drucklos sind.

Wird aus dieser Stellung der Wählhebel in Position N verschoben, so wird das Magnetventil 11 bestromt und die Leitung 10 wird mit der Leitung 30 verbunden. Das Ventil 21 wird so umgesteuert, daß das Reversierventil 7 die Leitung 4 mit der Leitung 22 verbindet und das Ventil 23 so umsteuert, daß an den Kupplungsventilen 24 und 25 sowie dem Notfahrventil 26 Druck ansteht. Das Magnetventil 12 wird bestromt und verbindet die Leitung 10 mit der Leitung 27, wodurch das Ventil 28 so umgesteuert wird, daß das Ventil 6 die Leitung 4 mit der Leitung 29 verbindet. Dadurch gelangt Druckflüssigkeit auf die Fläche 18 und bewegt mit dem entstehenden Druck den Kolben 20 des Ventils 17 an seinen unteren Anschlag und zieht somit die Parkklinke aus dem Parksperrenrad, wodurch die Blockierung im Automatikgetriebe aufgehoben wird. Gleichzeitig verbindet das Ventil 17 die Leitung 4 mit der Leitung 31, wodurch nun beidseitig am Ventil 23 Druck ansteht. Ist die Parkklinke außer Eingriff gebracht, so meldet ein nicht dargestellter Positionsschalter der elektronischen Getriebesteuerung 32 diese Position und die Getriebesteuerung 32 bestromt einen Magneten 33, welcher den Kolben 20 des Ventils 17 über eine Verrastung in dieser Stellung blockiert. Dadurch ist gewährleistet, daß bei plötzlichem Druckausfall während der Fahrt, jedoch bei Vorhandensein der elektrischen Spannung am Magneten 33 die Parkklinke nicht plötzlich einrastet und dies zu einem ungewollten Blockieren des Fahrzeuges führt.

Wird aus der Stellung P der dritte Gang angewählt, so wird zuerst das Magnetventil 11 bestromt, so daß über die Leitung 13 das Ventil 21 das Reversierventil 7 und das Ventil 23, die Ventile 24 und 25 mit Druck beaufschlagt sind. Nun wird das elektrische Drucksteuerventil 15 bestromt, so daß sich in der Leitung 13 ein Druck aufbaut, welcher das Ventil 24 dergestalt umsteuert, daß die Kupplung A mit Druck beaufschlagt wird und schließt. Gleichzeitig wird das Ventil 33 umgesteuert, so daß am Ventil 21 beidseitig Druck ansteht und somit das Magnetventil 11 wieder abgeschaltet werden kann. Das Ventil 28 wird dergestalt umgesteuert, daß über das Ventil 6 Druckflüssigkeit zum Ventil 17 gelangt und somit die Parksperre entriegelt wird. Nun wird das elektrische Drucksteuerventil 16 umgesteuert und über die Leitung 14 das Ventil 25 dergestalt umgesteuert, daß die Kupplung B mit Druck beaufschlagt wird und schließt.

Die elektronische Getriebesteuerung schaltet im Automatikbetrieb je nach Lastanforderung die verschiedenen Gänge, wobei die Ansteuerung der Magnetventile der Magnetventillogik 1 zu entnehmen sind.

Tritt nun während der Fahrt der Fall ein, daß durch Ausfall der elektronischen Getriebesteuerung 32 die Magnetventile plötzlich stromlos geschaltet werden, so soll bei Vorwärtsfahrt in mindestens einem Notgang weiter gefahren werden können, bis der Verbrennungsmotor abgestellt wird. Tritt dieser Zustand beispielsweise im zuvor beschriebenen dritten Gang auf, so werden die elektrischen Drucksteuerventile 15 und 16 stromlos geschaltet und die Leitung 13 wird drucklos. Da das Drucksteuerventil 16 im stromlosen Zustand schließt, wird die Leitung 14 mit Druck beaufschlagt. Über das Notfahrventil 26 werden die Leitungen 34 und 35 miteinander verbunden und das Ventil 24 bleibt in seiner Stellung, so daß die Kupplung A mit Druck beaufschlagt bleibt. Die Kupplung B bleibt unter Druck geschaltet. Die Parksperre bleibt bis zum Stillstand des Verbrennungsmotors ausgelegt, da das Ventil 17 mit Druck beaufschlagt bleibt.

Tritt ein Ausfall der elektronischen Getriebesteuerung 32 bei eingelegtem Rückwärtsgang auf, so soll der Rückwärtsgang ausgeschaltet werden, in dem alle Kupplungen oder Bremsen drucklos geschaltet werden und es soll die Parksperre eingelegt werden. Bei Einlegen des Rückwärtsgangs wird über das Magnetventil 11 über das Ventil 21 und das Reversierventil 7 und das Ventil 23 die Ventile 24 und 25 mit Druck beaufschlagt und über das Magnetventil 12 und das Ventil 6 und 17 die Parksperre ausgelegt. Wird nun das elektrische Drucksteuerventil 16 umgesteuert, so wird über das Ventil 25 die Kupplung B mit Druck beaufschlagt und schließt. Über die Schaltlogik 9 wird gleichzeitig die Kupplung D mit Druck beaufschlagt und schließt. Tritt in diesem eingelegten Rückwärtsgang ein Ausfall der elektronischen Getriebesteuerung 32 auf, werden alle Magnetventile stromlos geschaltet und die Magnetventile 11 und 12 trennen die Druckversorgung der Ventile 24 und 25 sowie des Ventils 17 ab, wodurch über die Feder 19 die Parksperre wieder eingelegt wird.

Ist nun in diesem Zustand die elektronische Getriebesteuerung ausgefallen und ein Bestromen der Magnetventile nicht mehr möglich, muß es jedoch gewährleistet sein, daß die Parksperre ausgelegt werden kann und ein Notgang für Vorwärtsfahrt automatisch eingelegt wird. Hierzu wird manuell über einen Hebel 36 an einer Welle vom Fahrer entgegen der Federkraft 19 die Parkklinke aus dem Parksperrenrad gezogen und der Hebel 36 verrastet. Dadurch wird der Kolben 20 des Ventils 17 in seine untere Stellung gebracht. Über eine Nut 37 im Kolben 20 gelangt Drucköl von der Leitung 4 in die Leitung 31 und versorgt über das Ventil 23 die Ventile 24 und 25 mit Drucköl. Indem die Leitungen 34 und 35 über das Notfahrventil 26 miteinander verbunden sind, wird das Ventil 24 dergestalt umgesteuert, daß die Kupplung A mit Druck beaufschlagt wird und schließt. Gleichzeitig wird das Ventil 33 umgesteuert und über eine Umsteuerung des Ventils 21 das Ventil 7 umgesteuert, wodurch das Ventil 23 von beiden Seiten mit Druck beaufschlagt ist. Über das Ventil 28 wird das Ventil 6 so umgesteuert, daß die Fläche 18 des Ventils 17 noch zusätzlich mit Druck beaufschlagt wird. Ist der Hebel 36 nicht verrastet, bleibt die Parksperre so lange ausgelegt, bis der Motor des Kraftfahrzeugs abgestellt wird und somit der Kolben 20 des Ventils 17 wieder in seine obere Ausgangsstellung gebracht wird. War der Hebel 36 zuvor verrastet, bleibt die Parksperre so lange ausgelegt, bis der Hebel 36 in seine Ausgangsstellung gebracht wird.

In einer weiteren Ausgestaltungsform wird aus Sicherheitsgründen an dem Hebel 36 eine Anlaßsperre angebracht, so daß bei ausgerasteter Parksperre der Motor nicht gestartet werden kann.

Durch diese Anordnung ist gewährleistet, daß bei Ausfall der elektronischen Getriebesteuerung 32 und somit nicht bestromten Magnetventilen bei laufendem Verbrennungsmotor in jedem Fall durch manuelles Betätigen eines Hebels 36 die Parksperre ausgelegt werden kann und gleichzeitig ein Gang für Vorwärtsfahrt geschaltet wird, wodurch sich das Fahrzeug in einer Vorwärtsrichtung bewegen läßt.

### Bezugszeichen

- 1: Magnetventillogik
- 2: Kupplungslogik
- 3: Pumpe
- 4: Leitung
- 5: Systemdruckventil
- 6: Ventil
- 7: Reversierventil
- 8: Druckreduzierventil
- 9: Schaltlogik
- 10: Leitung
- 11: Magnetventil
- 12: Magnetventil
- 13: Leitung
- 14: Leitung
- 15: Elektrisches Drucksteuerventil
- 16: Elektrisches Drucksteuerventil
- 17: Ventil (Parksperrenventil)
- 18: Fläche
- 19: Feder
- 20: Kolben
- 21: Ventil
- 22: Leitung
- 23: Ventil
- 24: Kupplungsventil
- 25: Kupplungsventil
- 26: Notfahrventil
- 27: Leitung
- 28: Ventil
- 29: Leitung
- 30: Leitung
- 31: Leitung
- 32: Getriebesteuerung
- 33: Ventil
- 34: Leitung
- 35: Leitung
- 36: Hebel
- 37: Nut

## Patentansprüche

1. Elektrisch-hydraulische Steuereinrichtung eines automatisch schaltenden Kraftfahrzeug-Getriebes mit zur Schaltung einzelner Gangstufen dienenden hydraulisch ein- und ausrückbaren Reibkupplungen bzw. Bremsen (A, B, C, D, E), deren Betätigungseinrichtungen jeweils Steuerventile (24, 25) zugeordnet sind, mit
einem elektronischen Steuergerät (32), mittels welchem in Abhängigkeit von Betriebsparametern des Kraftfahrzeug-Getriebes und eines Antriebsmotors sowie einer Einrichtung und/oder Fahrbeeinflussung, welche über eine elektrische Wirkverbindung mit dem Getriebe verbunden ist, die Betätigungseinrichtungen beherrschende, elektrisch betätigte Magnetventile (11, 12, 15, 16) verstellbar sind und,
einer mit einem Federspeicher verbundene Parksperreneinrichtung, welche hydraulisch über die Steuereinrichtung oder manuell entriegelt und über den Federspeicher verriegelt werden kann, **dadurch gekennzeichnet, daß** durch manuelles Entriegeln der Parksperreneinrichtung ein Steuerventil (17) hydraulisch angesteuert wird und dadurch ein Vorwärtsgang eingelegt wird, wobei das Steuerventil (17) in Verbindung mit einer manuellen Entriegelungseinrichtung (36) steht und im drucklosen Zustand von einer Feder (19) in einer Stellung gehalten wird, so daß ein am Steuerventil (17) anstehender Druck nicht an die hydraulische Getriebesteuerung weiter geleitet wird.

2. Elektronisch-hydraulische Steuereinrichtung nach dem Oberbegriff von Anspruch 1, **dadurch gekennzeichnet, daß** durch manuelles Entriegeln der Parksperreneinrichtung ein Steuerventil (17) hydraulisch angesteuert wird und dadurch ein Vorwärtsgang eingelegt wird, wobei durch das manuelle Entriegeln der Parksperreneinrichtung ein Kolben (20) des mit der Parksperreneinrichtung in Verbindung stehenden Steuerventils (17) dergestalt umgesteuert wird, daß ein am Steuerventil (17) anstehender Druck zur hydraulischen Steuerung geleitet wird und dadurch der Kolben (20) des Steuerventils (17) durch Druckbeaufschlagung so lange in dieser Stellung gehalten bleibt, bis eine Druckversorgung des Systems abgeschaltet wird.

3. Elektronisch-hydraulische Steuereinrichtung nach Anspruch 1 oder 2, **dadurch gekennzeichnet, daß** bei Ausfall des elektronischen Steuergerätes (32) und bei angewähltem Rückwärtsgang durch die Einrichtung zur Schalt- und/oder Fahrbeeinflussung die für den Rückwärtsgang benötigte Bremse oder Kupplung (B, D) durch Drucklosschaltung des entsprechenden Steuerventils (25, 9) geöffnet wird und die Parksperreneinrichtung über den Federspeicher automatisch verriegelt.

4. Elektronisch-hydraulische Steuereinrichtung nach Anspruch 1 oder 2, **dadurch gekennzeichnet, daß** die Parksperreneinrichtung durch Druckbeaufschlagung entriegelt wird und durch Bestromen eines Magneten eine Verrastung einrastet, welche die Parksperre während des bestromten Zustandes in einer ausgerasteten Stellung hält.

5. Elektronisch-hydraulische Steuereinrichtung nach Anspruch 1 oder 2, **dadurch gekennzeichnet, daß** durch Druckbeaufschlagen einer Kupplung bzw. Bremse für Vorwärtsfahrt (A) und nachfolgendem Stromlosschalten aller Magnetventile (11, 12, 15, 16) ein Ventil, welches die Parksperre ansteuert (17), bis zum Stillsetzen eines Antriebsmotors dergestalt angesteuert wird, daß eine Parksperre ausgelegt bleibt.

6. Elektronisch-hydraulische Steuereinrichtung nach Anspruch 1 oder 2, **dadurch gekennzeichnet, daß** bei manuell ausgerasteter Parksperre eine Sicherheitseinrichtung das Starten eines Antriebsmotors verhindert.

## Claims

1. Electrohydraulic control device of a motor vehicle automatic transmission having hydraulically engageable and disengageable friction clutches and/or brakes (A, B, C, D, E), which are used to select individual gear steps and with each of the actuating devices of which control valves (24, 25) are associated, comprising an electronic control unit (32), by means of which in dependence upon operating parameters of the motor vehicle transmission and of a driving motor as well as of a device and/or travel-influencing device, which is connected by an electrical active connection to the transmission, the electrically actuated solenoid valves (11, 12, 15, 16) controlling the actuating devices are adjustable and
a parking lock device, which is connected to a spring accumulator and may be unlocked hydraulically by means of the control device or manually and locked by means of the spring accumulator, **characterized in that** through manual unlocking of the parking lock device a control valve (17) is hydraulically activated and consequently a forward gear is engaged, wherein the control valve (17) is in connection with a manual unlocking device (36) and in the unpressurized state is held by a spring (19) in a position such that a pressure applied to the control valve (17) is not transmitted to the hydraulic transmission controller.

2. Electronic-hydraulic control device according to the preamble of claim 1, **characterized in that** through manual unlocking of the parking lock device a control valve (17) is hydraulically activated and consequently a forward gear is engaged, wherein by virtue of the manual unlocking of the parking lock device a piston (20) of the control valve (20) in connection with the parking lock device is reversed such that a pressure applied to the control valve (17) is transmitted to the hydraulic control and consequently the piston (20) of the control valve (17) as a result of pressurization remains held in said position until a pressure supply of the system is disconnected.

3. Electronic-hydraulic control device according to claim 1 or 2, **characterized in that**, in the event of failure of the electronic control unit (32) when reverse gear is selected, by means of the selection- and/or travel-influencing device the brake or clutch (B, D) required for the reverse gear is opened by switching the appropriate control valve (25, 9) to unpressurized and the parking lock device is automatically locked by means of the spring accumulator.

4. Electronic-hydraulic control device according to claim 1 or 2, **characterized in that** the parking lock device is unlocked through pressurization and by virtue of energizing a magnet a latching device engages, which holds the parking lock during the energized state in a disengaged position.

5. Electronic-hydraulic control device according to claim 1 or 2, **characterized in that** through pressurizing of a clutch and/or brake for forward travel (A) and subsequent de-energizing of all solenoid valves (11, 12, 15, 16) a valve, which activates (17) the parking lock, is activated up to stoppage of a driving motor such that a parking lock remains disengaged.

6. Electronic-hydraulic control device according to claim 1 or 2, **characterized in that**, when the parking lock is manually disengaged, a safety device prevents starting of a driving motor.

## Revendications

1. Dispositif de commande électro-hydraulique d'une boîte de vitesses de véhicule automobile à changement de rapport automatique comprenant
des embrayages à friction ou freins (A, B, C, D, E) servant à passer différents étages de vitesse, qui peuvent être fermés et ouverts hydrauliquement, et aux dispositifs d'actionnement desquels des distributeurs (24, 25) sont associés respectivement,
un appareil de commande électronique (32) au moyen duquel des électrovannes (11, 12, 15, 16) actionnées électriquement qui régissent les dispositifs d'actionnement, peuvent être manoeuvrées en fonction de paramètres de fonctionnement de la boîte de vitesses de véhicule et d'un moteur d'entraînement, ainsi que d'un dispositif et/ou d'une intervention de conduite qui est relié à la boîte de vitesses au moyen d'une liaison active électrique, et
un dispositif de frein de stationnement relié à un accumulateur à ressort, qui peut être déverrouillé hydrauliquement au moyen du dispositif de commande ou manuellement et qui peut être verrouillé par l'accumulateur à ressort,
**caractérisé en ce que**, par le déverrouillage manuel du dispositif de frein de stationnement, une soupape de distribution (17) est pilotée hydrauliquement et une vitesse de marche avant est enclenchée sous cet effet, la soupape de distribution (17) étant en liaison avec un dispositif de déverrouillage manuel (36) et, à l'état sans pression, étant maintenu par un ressort (19) dans une position telle qu'une pression présente au niveau de la soupape de distribution (17) ne soit pas transmise plus loin à la commande hydraulique de la boîte de vitesses.

2. Dispositif de commande électronique-hydraulique selon le préambule de la revendication 1, **caractérisé en ce qu'**une soupape de distribution (17) est pilotée hydrauliquement sous l'effet du déverrouillage manuel du dispositif de frein de stationnement, et une vitesse de marche avant est enclenchée par ce moyen, tandis que, sous l'effet du déverrouillage manuel du dispositif de frein de stationnement, un piston (20) de la soupape de distribution (17) qui est en liaison avec le dispositif de frein de stationnement est inversé de telle manière qu'une pression présente au niveau de la soupape de distribution (17) soit transmise à la commande hydraulique et que, sous cet effet, le piston (20) de la soupape de distribution (17) reste maintenu dans cette position, par la sollicitation de pression, jusqu'à ce qu'une alimentation en pression du système soit coupée.

3. Dispositif de commande électronique-hydraulique selon la revendication 1 ou 2, **caractérisé en ce qu'**en cas de défaillance de l'appareil de commande électronique (32), et si une vitesse de marche arrière est sélectionnée, le frein ou embrayage (B, D) nécessaire pour la vitesse de marche arrière est ouvert par le dispositif pour l'intervention sur le changement de rapport et/ou la conduite par la mise hors pression du distributeur correspondant (25, 9), et le dispositif de frein de stationnement est verrouillé automatiquement au moyen de l'accumulateur à ressort.

4. Dispositif de commande électronique-hydraulique selon la revendication 1 ou 2, **caractérisé en ce que** le dispositif de frein de stationnement est déverrouillé par une sollicitation de pression et que, par le passage du courant dans un électro-aimant, il active un enclenchement qui maintient le frein de stationnement dans une position déverrouillée pendant l'état parcouru par le courant.

5. Dispositif de commande électronique-hydraulique selon la revendication 1 ou 2, **caractérisé en ce que**, par la sollicitation de pression d'un embrayage ou frein pour la marche avant (A) et par la mise hors tension subséquente de toutes les électrovannes (11, 12, 15, 16), une vanne qui commande le frein de stationnement (17) est pilotée, jusqu'à la mise à l'arrêt d'un moteur d'entraînement, de telle manière qu'un frein de stationnement reste mis hors d'action.

6. Dispositif de commande électronique-hydraulique selon la revendication 1 ou 2, **caractérisé en ce que**, lorsque le frein de stationnement est désenclenché manuellement, un dispositif de sécurité empêche le démarrage d'un moteur d'entraînement.
